# EUROPÄISCHE PATENTSCHRIFT

(11) **EP 3 427 335 B1**
(45) Veröffentlichungstag und Bekanntmachung des Hinweises auf die Patenterteilung: **25.08.2021**
(21) Anmeldenummer: 17709971.0
(22) Anmeldetag: 10.03.2017
(51) Int. Cl.: H01Q 1/32, H01Q 9/32, H01Q 1/08, F16F 1/12, B23P 11/02

(54) **VERFAHREN ZUR HERSTELLUNG EINER STABANTENNE**
METHOD FOR MANUFACTURING A ROD ANTENNA
PROCÉDÉ DE PRODUCTION D'UNE ANTENNE TIGE

(30) Priorität: 11.03.2016 DE 102016002928
(43) Veröffentlichungstag der Anmeldung: 16.01.2019
(73) Patentinhaber: Hirschmann Car Communication GmbH, 72654 Neckartenzlingen (DE)
(72) Erfinder: SCHIEMANN, Rainer, 73734 Esslingen-Berkheim (DE); RIEDHOFER, Peter, 72654 Neckartenzlingen (DE); HEILEMANN, Ingo, 31303 Burgdorf (DE)
(74) Vertreter: Patentanwaltskanzlei WILHELM & BECK
(86) Internationale Anmeldenummer: PCT/EP2017/055662
(87) Internationale Veröffentlichungsnummer: WO 2017/153571

(56) Entgegenhaltungen:
- DE-A1-102006 055 022
- DE-C1- 19 941 501
- US-A- 3 013 245
- US-A- 4 204 302
- US-A1- 2006 081 185
- US-A1- 2014 266 942

## Beschreibung

Die Erfindung betrifft ein Verfahren zur Herstellung einer Stabantenne für ein Fahrzeug, wobei eine Spiralfeder an zumindest einem ihrer beiden Enden mit einem Antennenbauteil verbunden wird, sowie eine Werkzeuganordnung zur Durchführung des Verfahrens gemäß den Merkmalen der jeweiligen Oberbegriffe der beiden unabhängigen Patentansprüche.

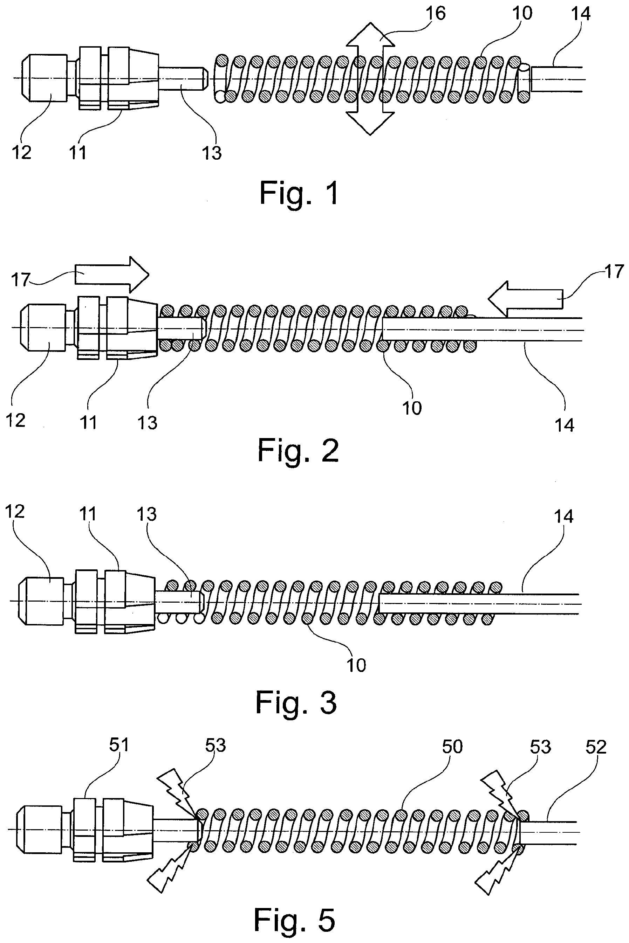

Stabantennen für Fahrzeuge sind grundsätzlich bekannt. Diese werden auf einer Karosserieoberfläche, zum Beispiel einem Fahrzeugdach, abnehmbar montiert und stellen insbesondere zum Empfangen von hochfrequenten Signalen einen LambdaViertel-Stab dar. Eine solche Stabantenne ist beispielsweise aus der DE 10 2006 055 022 A1 bekannt. Bei dieser Stabantenne wird ein Anschlussstück eines Befestigungselementes mit einer Antennenwicklung verpresst. Dabei gibt es jedoch Schwierigkeiten, da diese beiden Bauteile miteinander fluchten müssen aufgrund der Ausgestaltung der Antenne als Stab. Diese Situation ist in der Figur 5 dieser Patentanmeldung wiedergegeben. Eine Spiralfeder 50 soll mit einem Montagefuß 51 und/oder einem Antennenstab 52 in Wirkverbindung gebracht werden. Dabei ist es erforderlich, ein Teil des Montagefußes 51 bzw. einen Endbereich des Antennenstabes 52 in einem Befestigungsbereich 53 innerhalb der Spiralfeder 50 festzulegen. Dazu werden die entsprechenden Bereiche des Montagefußes 51 bzw. des Antennenstabes 52 in diesem Befestigungsbereich 53 eingepresst, wobei hohe Kräfte erforderlich sind, um diese Bauteile dauerhaft an der Spiralfeder 50 festzulegen, da eine entsprechend ausgestaltete Stabantenne während des Betriebes des Fahrzeuges hohen Kräften (zum Beispiel Windkräfte, mechanische Einwirkungen beim Waschen des Fahrzeuges und Dergleichen) ausgesetzt ist.

Der Erfindung liegt daher die Aufgabe zugrunde, ein entsprechendes Verfahren zur Herstellung einer Stabantenne und eine zugehörige Werkzeuganordnung zur Durchführung des Herstellungsverfahrens anzugeben, mit dem eine einfache Montage möglich ist, gleichzeitig die aneinander zu befestigenden Bauteile aber auch dauerhaft zueinander festgelegt werden.

Diese Aufgabe ist durch die Merkmale der beiden unabhängigen Patentansprüche gelöst.

Hinsichtlich des Verfahrens zur Herstellung einer Stabantenne ist erfindungsgemäß vorgesehen, dass die Verbindung zwischen der Spiralfeder und dem Antennenbauteil durch eine Aufweitung des Innendurchmessers der Spiralfeder, durch ein zumindest teilweises Einschieben des Antennenbauteiles in die aufgeweitete Spiralfeder und anschließende Rückführung der Spiralfeder in Richtung ihres ursprünglichen Innendurchmessers zwecks Festlegung erfolgt. Durch eine Kraftaufbringung auf die Spiralfeder, die einen ursprünglichen Innendurchmesser aufweist, wird dieser Innendurchmesser vergrößert, sodass es möglich ist, das Antennenbauteil mit seinem Befestigungsbereich fluchtend in den entsprechenden Befestigungsbereich der zunächst aufgeweiteten Spiralfeder fluchtend einzuschieben. Nachdem dies erfolgt ist, wird die Kraft zur Aufweitung der Spiralfeder weggenommen, sodass sich die Spiralfeder zusammenzieht und eine Rückführung der Spiralfeder in Richtung ihres ursprünglichen Innendurchmessers erfolgt. Dabei umschließt der Befestigungsbereich der Spiralfeder den Befestigungsbereich des Antennenbauteiles unter einer ausreichend hohen Vorspannung, sodass diese beiden Bauteile miteinander dauerhaft und fluchtend verbunden sind. Dabei ist darauf zu achten, dass der Außendurchmesser des Befestigungsbereiches des Antennenbauteiles zumindest geringfügig größer ist als der ursprüngliche Innendurchmesser der Spiralfeder, sodass sich der innere Bereich der Spiralfeder nach der Rückführung in Richtung ihres ursprünglichen Innendurchmessers an diesen Befestigungsbereich anlegen kann. Hierbei werden in vorteilhafter Weise Toleranzen ausgeglichen, insbesondere dann, wenn der Außendurchmesser des Befestigungsbereiches des Antennenbauteiles größer ist als der Innendurchmesser der Spiralfeder und insbesondere bei Serienherstellung von Antennenbauteilen schwankt.

Nach dem erfindungsgemäßen Verfahren können als Antennenbauteil In Weiterbildung der Erfindung ein Montagefuß mit seinem Befestigungszapfen in einem Endbereich der Spiralfeder und/oder ein Antennenstab in der Spiralfeder angeordnet und festgelegt werden. Die Spiralfeder einerseits hat den Zweck des Empfanges und/oder der Weiterbildung der hochfrequenten Signale, die mit dem Antennenstab empfangen werden. Gleichzeitig wird durch diese Spiralfeder eine Nachgiebigkeit der gesamten Stabantenne realisiert, um gewisser Verbiegungen während des Betriebes der Stabantenne am Fahrzeug zu ermöglichen, die mit einem durchgehenden starren Stab nicht gegeben wären. Mittels des Montagefußes wird die Stabantenne zum Beispiel über ein Gewinde in einen entsprechenden Halter an dem Fahrzeug, der ein korrespondierendes Gegengewinde aufweist, eingeschraubt. Dadurch kann die fertige Stabantenne einerseits sicher an dem Fahrzeug festgelegt, gleichzeitig aber auch einfach entfernt werden.

Bezüglich der Festlegung des Antennenstabes an der Spiralfeder ist In Weiterbildung der Erfindung vorgesehen, dass der Antennenstab mit seinem einen Endbereich (also nur einem kurzen Befestigungsbereich und nicht über die gesamte Länge) in dem Endbereich der Spiralfeder, der dem Montagefuß gegenüberliegt, festgelegt wird. Dadurch lässt sich die erforderliche Nachgiebigkeit der fertigen Stabantenne realisieren. Je nach Länge und Einsatzzweck einer solchen nach der Erfindung hergestellten Stabantenne kann jedoch auch daran gedacht werden, dass der Antennenstab über eine größere Länge (zum Beispiel bis hin zur Hälfte) oder sogar vollständig in die Spiralfeder (bis hin zu dem Bereich, in dem der Befestigungszapfen des Montagefußes in die Spiralfeder hineinragt) eingeführt wird.

Zum Schutz der Stabantenne vor äußeren Einflüssen kann diese In Weiterbildung der Erfindung mit einer Ummantelung versehen werden. Eine solche Ummantelung ist beispielsweise ein separates Bauteil (zum Beispiel eine Hülse), die über die bis hierhin fertiggestellte Stabantenne geschoben wird. Es ist allerdings auch denkbar, dass die Ummantelung in einem Spritzgussverfahren oder vergleichbaren Verfahren aufgebracht wird.

Zur Durchführung des Verfahrens ist weiterhin eine Werkzeuganordnung beansprucht. Mittels dieser Werkzeuganordnung kann das erfindungsgemäße Verfahren durchgeführt werden, indem die Schritte des Aufweitens der Spiralfeder, dem Einschieben des Montagefußes und/oder des Antennenstabes und dem nachfolgenden Rückführen des Innendurchmessers der Spiralfeder durchgeführt werden.

Die Werkzeuganordnung weist eine Haltevorrichtung für das zumindest eine Antennenbauteil, nämlich für den Montagefuß und/oder den Antennenstab auf, sowie Mittel zum Halten und Aufweiten der Spiralfeder. Die vorstehend genannte Haltevorrichtung sowie die Mittel zum Halten und Aufweiten können manuell bedient werden, wobei auch eine Automatisierung des Verfahrens nach der Erfindung mittels einer entsprechenden Werkzeuganordnung denkbar ist.

Das erfindungsgemäße Verfahren wird im Folgenden anhand der Figuren 1 bis 3 beschrieben.

Eine Werkzeuganordnung zur Durchführung des erfindungsgemäßen Verfahrens wird ebenfalls im Folgenden beschrieben und ist in Figur 3 gezeigt.

Figur 1 zeigt den ersten Schritt des Verfahrens zur Herstellung einer Stabantenne, bei der eine Kraft auf eine Spiralfeder aufgebracht wird, um diese aufzuweiten. Als Antennenbauteil sollen bei diesem Ausführungsbeispiel ein Montagefuß 11, der ein Gewinde 12 und einen Befestigungszapfen 13 aufweist, sowie ein Antennenstab 14 dauerhaft mit der Spiralfeder 10 verbunden werden. Mit 15 sind im Bereich des Montagefußes 11 die Durchmesserverhältnisse bezeichnet. Der Außendurchmesser des Befestigungszapfens 13 ist fest und ist nach einer Aufweitung 16 der Spiralfeder 10 derart kleiner, dass er ohne Kraftaufwendung in den aufgeweiteten Befestigungsbereich der Spiralfeder 10 eingeschoben werden kann. Gleiches gilt für den Antennenstab 14, der ohne nennenswerte Kraftaufbringung in den korrespondierenden Befestigungsbereich der aufgeweiteten Spiralfeder 10 eingeschoben werden kann. Auch wenn in Figur 1 im Bereich des rechten Endes der Spiralfeder 10 dargestellt ist, dass der Innendurchmesser der letzten Windung der Spiralfeder 10 etwa dem Außendurchmesser des Antennenstabes 14 entspricht, ist ein Einschieben des Antennenstabes 14 in das Innere der Spiralfeder 10 ohne weiteres möglich, da das Ende der Wicklung der Spiralfeder 10 ohne große Kraftaufbringung ebenfalls aufgeweitet werden kann und der Antennenstab 14 in die weiteren Wicklungen der Spiralfeder 10 (bei Betrachtung der Figur 1 in linke Richtung) eingeschoben werden kann.

Figur 2 zeigt den Zustand, bei dem das zumindest eine Antennenbauteil, nämlich der Montagefuß 11 und/oder der Antennenstab 14, mittels einer Verschiebung 17 in das Innere der Spiralfeder 10 eingeschoben worden sind. Während dieses Vorganges ist die Spiralfeder 10 noch aufgeweitet, das heißt, dass immer noch eine äußere Kraft auf die Spiralfeder 10 zwecks Aufweitung 16 aufgebracht ist.

Figur 3 schließlich zeigt, dass die äußere Kraft zur Aufweitung 16 auf die Spiralfeder 10 weggenommen wurde, sodass sich die letzten Windungen der Spiralfeder 10 um den Befestigungszapfen 13 unter Vorspannung legen und diesen dauerhaft fixieren. Gleiches gilt für die letzten Windungen der Spiralfeder 10 im Bereich des Antennenstabes 14. Nicht gezeigt, aber vorhanden sein kann eine Ummantelung, die etwa links von dem Befestigungszapfen 13 des Montagefußes 11 beginnt und sich zumindest über die Spiralfeder 10, vorzugsweise aber auch über den Antennenstab 14 erstreckt (Richtungsangaben beziehen sich auf eine Betrachtung der Figur 3).

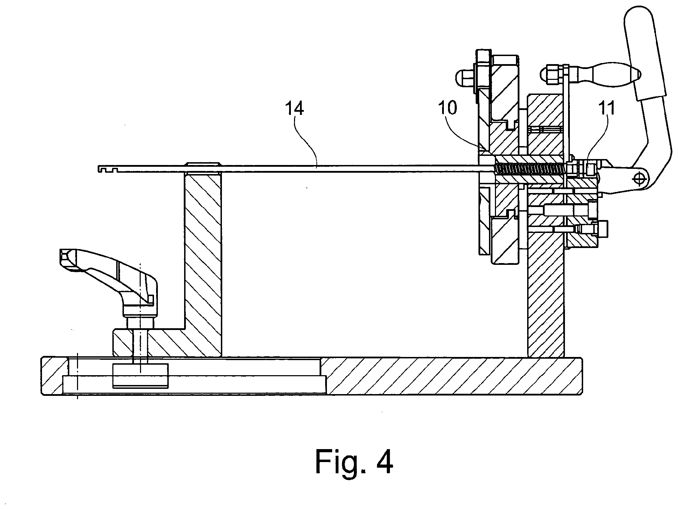

Der Vollständigkeit halber sei erwähnt, dass der Antennenstab 14 in dem Ausführungsbeispiel (insbesondere Figur 3) nur teilweise in einen Teilbereich der Spiralfeder 10 eingeschoben und festgelegt (festgeklemmt) ist. Es ist jedoch auch denkbar, den Antennenstab 14 mit seinem einen Ende noch weiter in die Spiralfeder 10, insbesondere bis hin zu dem Befestigungszapfen 13, einzuschieben. Figur 4 zeigt eine Werkzeuganordnung, die manuell zur Herstellung einer Stabantenne bedient werden kann. Ersichtlich ist eine Haltevorrichtung für den Montagefuß 11 sowie Mittel zum Halten und Aufweiten der Spiralfeder 10. Mit Hilfe dieser Haltevorrichtung sowie den Mitteln zum Halten und Aufweiten der Spiralfeder kann das erfindungsgemäße Verfahren durchgeführt werden. Falls die Stabantenne auch einen Antennenstab aufweist, wird dieser Antennenstab 14 in einer weiteren Haltevorrichtung eingespannt, wobei diese Haltevorrichtung, genauso wie die Haltevorrichtung für den Montagefuß, axial in Richtung der Spiralfeder 10 zwecks Einschiebens (Einschiebevorgang 17) ausgebildet ist. Nachdem die Spiralfeder 10 aufgeweitet und der Montagefuß 11 mit seinem Befestigungszapfen 13 und/oder der Antennenstab 14 in den Befestigungsbereich der Spiralfeder 10 eingeschoben worden ist, wird diese äußere Kraft von der Spiralfeder 10 weggenommen, sodass sie sich zusammenziehen kann und dabei im Befestigungsbereich den Befestigungszapfen 13 bzw. den Antennenstab 14 einklemmt. Wichtig bei der gezeigten Werkzeuganordnung ist es, dass sowohl die Mittelachse des Montagefußes 11, die Mittelachse der Spiralfeder 10 und, soweit vorhanden, die Mittelachse des Antennenstabes 14 fluchtend zueinander ausgerichtet sind, um eine stabförmige Antenne (Stabantenne) herstellen zu können.

Während die gezeigte Werkzeuganordnung manuell bedient wird, kann auch alternativ eine automatisierte Herstellung einer Stabantenne denkbar sein.

### Bezugszeichenliste

- 10.: Spiralfeder
- 11.: Montagefuß
- 12.: Gewinde
- 13.: Befestigungszapfen
- 14.: Antennenstab
- 15.: Durchmesserverhältnis
- 16.: Aufweitung
- 17.: Verschiebung
- 50.: Spiralfeder
- 51.: Montagefuß
- 52.: Antennenstab
- 53.: Befestigungsbereich

## Patentansprüche

1. Verfahren zur Herstellung einer Stabantenne für ein Fahrzeug, wobei eine Spiralfeder (10) an zumindest einem ihrer beiden Enden mit einem Antennenbauteil verbunden wird, **dadurch gekennzeichnet, dass** die Verbindung zwischen der Spiralfeder (10) und dem Antennenbauteil durch eine Aufweitung des Innendurchmessers der Spiralfeder (10), durch ein zumindest teilweises Einschieben des Antennenbauteiles in die aufgeweitete Spiralfeder (10) und anschließende Rückführung der Spiralfeder in Richtung ihres ursprünglichen Innendurchmessers zwecks Festlegung erfolgt.

2. Verfahren nach Anspruch 1, **dadurch gekennzeichnet, dass** als ein Antennenbauteil ein Montagefuß (11) mit seinem Befestigungszapfen (13) in einem Endbereich der Spiralfeder (10) angeordnet und festgelegt wird.

3. Verfahren nach Anspruch 1, **dadurch gekennzeichnet, dass** als ein Antennenbauteil zumindest teilweise ein Antennenstab (14) in der Spiralfeder (10) angeordnet und festgelegt wird.

4. Verfahren nach Anspruch 3, **dadurch gekennzeichnet, dass** der Antennenstab (14) mit seinem einen Endbereich in dem Endbereich der Spiralfeder (10) festgelegt wird.

5. Verfahren nach einem der vorhergehenden Ansprüche, **dadurch gekennzeichnet, dass** die Stabantenne mit einer Ummantelung versehen wird.

6. Werkzeuganordnung zur Durchführung des Verfahrens nach einem der vorhergehenden Ansprüche, **dadurch gekennzeichnet, dass** die Werkzeuganordnung eine Haltevorrichtung für den Montagefuß (11) und/oder den Antennenstab (14) sowie Mittel zum Halten und Aufweiten der Spiralfeder (10) aufweist.

## Claims

1. Method for producing a rod antenna for a vehicle, wherein a helical spring (10) is connected at at least one of the two ends thereof to an antenna component, **characterized in that** the connection between the helical spring (10) and the antenna component is carried out by expanding the inner diameter of the helical spring (10), by at least partially inserting the antenna component into the expanded helical spring (10) and subsequently returning the helical spring in the direction of the original inner diameter thereof for the purposes of securing.

2. Method according to Claim 1, **characterized in that** an assembly base (11) as an antenna component is arranged and secured with the securing pin (13) thereof in an end region of the helical spring (10).

3. Method according to Claim 1, **characterized in that** an antenna rod (14) as an antenna component is at least partially arranged and secured in the helical spring (10) .

4. Method according to Claim 3, **characterized in that** the antenna rod (14) is secured with one end region thereof in the end region of the helical spring (10).

5. Method according to one of the preceding claims, **characterized in that** the rod antenna is provided with a covering.

6. Tool arrangement for carrying out the method according to one of the preceding claims, **characterized in that** the tool arrangement has a retention device for the assembly base (11) and/or the antenna rod (14) and means for retaining and expanding the helical spring (10) .

## Revendications

1. Procédé de fabrication d'une antenne tige destinée à un véhicule, un ressort hélicoïdal (10) étant relié par au moins une de ses deux extrémités à un composant d'antenne, **caractérisé en ce que** la liaison entre le ressort hélicoïdal (10) et le composant d'antenne est effectuée par élargissement du diamètre intérieur du ressort hélicoïdal (10), par insertion au moins partielle du composant d'antenne dans le ressort hélicoïdal élargi (10) puis par retour du ressort hélicoïdal en direction de son diamètre intérieur d'origine pour obtenir la fixation.

2. Procédé selon la revendication 1, **caractérisé en ce que** le composant d'antenne utilisé est un pied de montage (11) dont le tenon de fixation (13) est disposé et fixé dans une région d'extrémité du ressort hélicoïdal (10).

3. Procédé selon la revendication 1, **caractérisé en ce que** le composant d'antenne utilisé est au moins partiellement une tige d'antenne (14) qui est disposée et fixée dans le ressort hélicoïdal (10).

4. Procédé selon la revendication 3, **caractérisé en ce que** la tige d'antenne (14) est fixée, au niveau de sa première région d'extrémité, dans la région d'extrémité du ressort hélicoïdal (10).

5. Procédé selon l'une des revendications précédentes, **caractérisé en ce que** l'antenne tige est pourvue d'une gaine.

6. Ensemble d'outils destiné à mettre en œuvre le procédé selon l'une des revendications précédentes, **caractérisé en ce que** l'ensemble d'outils comporte un dispositif de retenue du pied de montage (11) et/ou de la tige d'antenne (14) et des moyens de retenue et d'élargissement du ressort hélicoïdal (10).
